# EUROPÄISCHE PATENTSCHRIFT

(11) **EP 2 370 229 B1**
(45) Veröffentlichungstag und Bekanntmachung des Hinweises auf die Patenterteilung: **17.04.2019**
(21) Anmeldenummer: 09752841.8
(22) Anmeldetag: 18.11.2009
(51) Int. Cl.: B23K 35/02, B23K 35/28, B32B 15/01, C22C 21/00, B23K 101/14

(54) **MEHRSCHICHTIGES ALUMINIUMBAND ZUM LÖTEN, LÖTBAUTEIL, HERSTELLUNGSVERFAHREN UND WÄRMETAUSCHER UND VERWENDUNG**
MULTI-LAYERED ALUMINUM STRIP FOR BRAZING, BRAZING COMPONENT, MANUFACTURING METHOD AND HEAT EXCHANGER AND USE
BANDE EN ALUMINIUM MULTICOUCHE POUR LE BRASAGE, COMPOSANT DE BRASAGE, PROCÉDÉ DE PRODUCTION ET ÉCHANGEUR THERMIQUE ET UTILISATION

(30) Priorität: 28.11.2008 DE 102008059450
(43) Veröffentlichungstag der Anmeldung: 05.10.2011
(73) Patentinhaber: MAHLE Behr GmbH & Co. KG, 70469 Stuttgart (DE)
(72) Erfinder: GRÜNENWALD, Bernd, 72622 Nürtingen (DE); WALD, Alexander, 71065 Sindelfingen (DE); GRAY, Alan, Banbury Oxon 0X15 4BB (GB)
(74) Vertreter: Grauel, Andreas
(86) Internationale Anmeldenummer: PCT/EP2009/065404
(87) Internationale Veröffentlichungsnummer: WO 2010/060843

(56) Entgegenhaltungen:
- WO-A1-03/089237
- US-A1- 2002 142 185

## Beschreibung

Die Erfindung betrifft ein Lötbauteil aus einem Aluminiumband mit einer Banddicke, wobei das Lötbauteil ein mit einer Lötverbindung versehenes Profil aufweist. Weiter betrifft die Erfindung ein Herstellungsverfahren für ein solches Lötbauteil. Die Erfindung betrifft auch einen Wärmetauscher und eine Verwendung des Wärmetauschers.

Ein Aluminiumband oder ein Bauteil, insbesondere ein Rohr, der eingangs genannten Art, wird bevorzugt zur Darstellung von besonders korrosionsbeständigen Komponenten eines Wärmetauschers bzw. zur Darstellung eines besonders korrosionsbeständigen Wärmetauschers verwendet. Beispielsweise in der Anmeldung der Anmelderin EP 1 762 810 A2 werden zur Anbringung von Turbulatoren an Flachrohren die Flachrohre durch eine erste Aluminiumlegierung gebildet, welche mit einer zweiten Aluminiumlegierung plattiert ist, wobei die Kombination der Legierungen eine "Brown-Band"-Opferschicht nach dem Löten bildet.

Grundsätzlich sind Legierungen zur Verwendung in gelöteten, mit verbessertem Korrosionsschutz versehenen Lötbauteilen aus US 5,037,707, EP 0 691 898 B1 sowie EP 3 263 337 B1 bekannt.

Beispielsweise beschreibt EP 0 691 898 B1 eine bevorzugte Lot-Aluminiumlegierung, welche zu einer Phasenausfällung feiner Al-Mn-Cu-Teilchen führt. Ein gelöteter Aluminiumzusammenbau weist dazu einen Kern auf, wobei auf mindestens einer Seite des Kerns ein Überzug der Lotlegierung auf Aluminiumbasis enthaltend Silizium als Hauptinhaltsstoff vorliegt. Dies führt beim Löten dazu, dass in dem Kern auf Aluminiumbasis neben dem Lotlegierungsüberzug auf Aluminiumbasis ein Streifen, umfassend eine dichte Ausfällung von Teilchen - enthaltend Mn und Si - vorliegt, wobei der Streifen den Kern auf Aluminiumbasis vor Korrosion schützt.

Zwar ist in EP 0 691 898 B1 angegeben, dass die Herstellung von Aluminiumbändern solcher Art mittels Kaltwalzen ohne einen katastrophalen Festigkeitsverlust oder Korrosionsverlust bis zu einer Dicke von 150µm oder geringer erfolgen kann - es hat sich jedoch gezeigt, dass im Zuge der Materialdickenreduzierung aufgrund der beim Löten ablaufenden Diffusionsprozesse eine weitere Reduzierung der Materialstärke tatsächlich nicht möglich ist, da eindiffundierendes Silizium aus einer Lotplattierung den Grundwerkstoff beim Löten vollständig durchdringt. Dies führt dazu, dass beim Angriff korrosiver Medien die Korrosion nicht flächig in einer dünnen Oberflächenschicht abläuft, sondern schnell und zielgerichtet in die Tiefe geht und zu einer frühzeitigen Perforation des Materials des Lötbauteils führt. Dieser Effekt ist unerwünscht und ergibt sich, sobald vergleichsweise dünnes Aluminiumbandmaterial außen und/oder innen lotplattiert ist.

Die WO 03/089237 A1 offenbart ein Aluminiumband, bei welchem eine dünne Zwischenschicht zwischen einem Kern und einer äußeren Lotschicht vorgesehen ist, damit die Lotschicht das Material des Kerns nicht negativ beeinträchtigt. Die Zwischenschicht hat jedoch keinen Einfluss auf die Si-Diffusion von der Lotschicht hin zum Kern und bildet keine "Brown-Band"-Schicht aus.

Wünschenswert wäre es, Korrosionsbeständigkeit und/oder verbesserte Materialfestigkeiten, vergleichsweise gute Fließspannungen und/oder Duktilitäten, auch für vergleichsweise dünne Materialstärken zu erreichen.

An dieser Stelle setzt die Erfindung an, deren Aufgabe es ist, ein Lötbauteil, sowie ein Herstellungsverfahren und einen Wärmetauscher und eine Verwendung des Wärmetauschers anzugeben, welche eine vergleichsweise gute Korrosionsbeständigkeit auch bei vergleichsweise geringen Materialstärken haben und insbesondere auch eine verbesserte Materialfestigkeit, wie z.B. erhöhte Fließspannung und/oder Duktilität.

Die Aufgaben werden mit den Merkmalen der unabhängigen Ansprüche 1, 10, 11 und 12 gelöst.

Die Erfindung geht von der Überlegung aus, dass die Wirkung der im Stand der Technik beschriebenen "Brown-Band"-Schicht für geringere Materialstärken unterhalb von 500µm erhalten werden kann, wenn die Auslegung der Schichtdicken vorteilhaft angepasst ist an die Banddicke des Aluminiumbandes. Die Erfindung hat erkannt, dass bei Banddicken des Aluminiumbandes unterhalb von 500µm eine Schichtdicke der "Brown-Band"-Schicht - welche üblicherweise im Bereich von einigen 10µm liegt - einen signifikanten Anteil an der Banddicke hat und berücksichtig werden muss bei der Wirkung hinsichtlich Korrosionsbeständigkeit und Materialstärkeeigenschaften wie Festigkeit und Duktilität. Gemäß dem erfinderischen Konzept soll nach dem Lötprozess in dem wenigstens einen Bereich noch wenigstens 5% der Banddicke verbleiben, welche durch die erste Aluminiumlegierung der Kernschicht eingenommen wird. Die Dicke der Kernschicht und/oder eine Dicke der Plattierungsschicht sind entsprechend auszulegen. Gemäß dem Konzept der Erfindung führt dies zu einem Lötbauteil, bei dem in dem wenigstens einen Bereich wenigstens 5% der Banddicke durch die erste Aluminiumlegierung der Kernschicht eingenommen wird. Die Erfindung hat überraschend festgestellt, dass für diese Fälle eine "Brown-Band"-Schicht die Korrosionsbeständigkeit auch weiterhin hemmt. Zudem werden Materialstärkeeigenschaften wie Festigkeit und Duktilität in vorteilhafter Weise erhalten, wenn gemäß der weiteren Erkenntnis der Erfindung die "Brown-Band"-Schicht mehr als 20% der Banddicke einnimmt.

Mit anderen Worten hat die Erfindung gemäß ihrem Konzept erreicht, dass eine Schichtdicke der "Brown-Band"-Schicht und der Kernschicht in sorgfältig abgestimmter Weise zu einer erheblich verbesserten Materialeigenschaft hinsichtlich Korrosionsbeständigkeit und Materialstärke auch bei vergleichsweise dünnen Banddicken führt. Dies betrifft generell Banddicken unterhalb von 500µm. Insbesondere können die genannten Vorteile auch bei Banddicken unterhalb von 400µm und insbesondere unterhalb von 300µm erreicht werden. Nachweisbar sind die Eigenschaften auch bei Banddicken unterhalb vom 250µm, vorteilhaft unterhalb von 200µm und insbesondere unterhalb von 150µm. Es hat sich bei Versuchen gezeigt, dass die im Stand der Technik auftretenden nachteiligen Eigenschaften einer Durchkorrosion ausbleiben, wenn eine "Brown-Band"-Schicht nicht mehr als 95% der Banddicke, insbesondere nicht mehr als 80% der Banddicke übersteigt. Vorzugsweise führt das Konzept der Erfindung auf ein Aluminiumband und ein Lötbauteil, bei dem noch wenigstens 10%, insbesondere wenigstens 20%, insbesondere bis zu 40% oder 50% der Banddicke verbleibt, welche durch die erste Aluminiumlegierung der Kernschicht eingenommen wird. Ebenso ist eine Materialstärke besonders vorteilhaft ausgebildet, wenn die "Brown-Band"-Schicht mehr als 30%, insbesondere mehr als 40% der Banddicke einnimmt.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung, sowie hinsichtlich weiterer Vorteile zu realisieren.

Im Rahmen einer besonders bevorzugten Weiterbildung hat sich gezeigt, dass besonders gute Ergebnisse hinsichtlich Korrosionsbeständigkeit und Materialstärke wie Festigkeit und Fließspannung erhalten werden, wenn beim Löten eines Aluminiumbandes gemäß dem Konzept der Erfindung vorzugsweise noch zwischen 40% bis 50% der Banddicke verbleibt, welche durch die erste Aluminiumlegierung der Kernschicht eingenommen wird.

Es hat sich dazu als besonders vorteilhaft erwiesen, dass die Plattierungsschicht und/oder die Kernschicht ausgelegt ist, die Bildung der "Brown-Band"-Schicht zu unterstützen - d.h. Plattierungsschicht und Kernschicht sollen die "Brown-Band"-Bildung unterstützen. Bei sehr geringen Materialstärken ist es vorteilhaft, eine Kernhauptschicht so auszulegen, dass die Bildung der "Brown-Band"-Schicht gehemmt wird.

Erfindungsgemäß wird für die zweite Aluminiumlegierung der Plattierungsschicht eine Aluminiumlegierung der 4000er-Serie (AA4XXX) verwendet. Geeignet sind beispielsweise die Aluminiumlegierungen AA4343, AA4045 oder AA4047 sowie AA4004 oder AA4104 samt Modifikationen dieser Legierungen. Ein besonders hoher Siliziumanteil in solchen Legierungen zwischen 0,6% bis 21,5% Silizium reduziert den Schmelzpunkt der Legierung und macht die Schmelze dünnflüssiger. So hat sich insbesondere ein Siliziumanteil zwischen 0,6% und 21,5%, insbesondere zwischen 6% und 15% oder zwischen 6% und 12% vorteilhaft erwiesen - letztere stellen insbesondere Siliziumanteile im Bereich des Eutektikums dar. Alternativ kann das AISi-Lot bzw. das Silizium auch als Pulver aufgebracht werden, z.B. in Form von Silflux wie es in US 5,232,788 beschrieben ist. Das AISi-Lot kann zusätzlich oder alternativ auch mittels Flammspritzen, Elektroplattieren bzw. nach anderen geeigneten Verfahren aufgebracht werden.

Als vorteilhaft hat sich für eine erste Aluminiumlegierung der Kernschicht eine Aluminiumlegierung mit wesentlichen Anteilen von Mn und/oder Mg erwiesen. So ist erfindungsgemäß die erste Aluminiumlegierung der Kernschicht, insbesondere Kernhauptschicht, eine Aluminiumlegierung der 3000er-Serie (AA3XXX) oder 5000er-Serie (AA5XXX) oder 6000er-Serie (AA6XXX). Die Aluminiumlegierungen der 3000er-Serie weisen eine besonders vorteilhafte Korrosionsbeständigkeit auf während die Legierungen der 5000er-Serie und 6000er-Serie aufgrund ihrer höheren Mangan- und/oder Magnesiumanteile besonders hohe Festigkeiten haben.

Im Rahmen der Erfindung ist vorgesehen, dass die Kernschicht einen geringeren Anteil von Silizium als die Plattierungsschicht aufweist. Dies führt zu einem grundsätzlich gewünschten Diffusionsverhalten des Siliziums beim Lötprozess zur Bildung der "Brown-Band"-Schicht. Nach dem Lötprozess verbleibt so eine Plattierungsschicht einer Restdicke während die "Brown-Band"-Schicht aus der Plattierungsschicht eine Ursprungsdicke und - vorzugsweise in weitaus geringerem Maße - aus der Kernschicht einer Ursprungsdicke gebildet ist.

Erfindungsgemäß ist die Kernschicht mehrschichtig mit einer, vorzugsweise zentralen, Kernhauptschicht und wenigstens einer Kernseitenschicht ausgeführt. Erfindungsgemäß weisen die Kernhauptschicht und die Kernseitenschicht jeweils einen geringeren Anteil von Silizium als die Plattierungsschicht auf und zudem die Kernhauptschicht einen höheren Siliziumanteil auf als die Kernseitenschicht. Aufgrund des höheren Siliziumanteils in der Kernhauptschicht im Vergleich zur Kernseitenschicht führt dies zu einem Diffusionsstopp des Siliziums. In besonders vorteilhafter Weise ist dabei selbst bei geringen Banddicken des Aluminiumbandes dem generellen Trend eines Durchdiffundierens des Siliziums aus der Plattierungsschicht entgegengewirkt, und zwar durch den diffusionshemmenden höheren Siliziumanteil in der Kernhauptschicht. Vorteilhaft ist in der Kernhauptschicht ein vergleichsweise geringer Fe-Anteil und/oder ein vergleichsweise hoher Cu-Anteil vorhanden. Vorteilhaft ist der Fe-Anteil der Kernhauptschicht um wenigstens 0.1 % geringer und/oder der Cu-Anteil der Kernhauptschicht um 0.1% höher als in der Kernseitenschicht. Die vorgenannte Weiterbildung stellt somit eine besonders vorteilhafte zusätzliche Maßnahme zur Verfügung, welche dazu führt, dass gemäß dem Konzept der Erfindung nach dem Lötprozess in dem wenigstens einen Bereich noch wenigstens 5% der Banddicke verbleibt, welche durch die erste Aluminiumlegierung der Kernschicht eingenommen wird.

Im Rahmen einer weiteren besonders bevorzugten Weiterbildung der Erfindung hat sich eine erste Aluminiumlegierung der Kernschicht mit Anteilen von Silizium zwischen 0% und 0.4%, insbesondere zwischen 0% und 0.25%, insbesondere Anteilen von Silizium zwischen 0% und 0.15% bzw. 0.1% und 0.25% erwiesen. Im Rahmen der zuvor genannten Weiterbildung hat sich diese Aluminiumlegierung auch als bevorzugt in der Kernseitenschicht erwiesen. Beispielsweise könnte eine Kernseitenschicht einen Siliziumanteil von 0.15% aufweisen während eine, vorzugsweise zentrale, Kernhauptschicht einen Siliziumanteil von 0.25% aufweist.

Besonders vorteilhaft ist darüber hinaus, dass die erste Aluminiumlegierung der Kernschicht wenigstens Anteile wie folgt aufweist:
Si 0-0.4%, insbesondere 0-0.25%, insbesondere 0-0.15%, vorzugsweise 0.1-0.25%;
Fe 0-0.8%, insbesondere 0-0.15%, insbesondere 0-0.08%, vorzugsweise 0.05-0.15%;
Cu 0.1-1.0%, insbesondere 0.4-0.8%;
Mn 0.5-2.5%, insbesondere 0.7-1.5%.

Ein erhöhter Mn-Anteil in der Kernschicht führt zu einer vergleichsweise hohen Festigkeit nach dem Löten.

Zusätzlich hat es sich als besonders vorteilhaft erwiesen, dass die erste Aluminiumlegierung der Kernschicht weitere Anteile wie folgt aufweist:
Mg < 0.8%, insbesondere < 0.6%
Ti < 0.2%, insbesondere < 0.1%

Zusätzlich hat es sich als besonders vorteilhaft erwiesen, dass die erste Aluminiumlegierung der Kernschicht weiter Anteile wie folgt aufweist:
Cr, Zr, V, Zn < 0.05%
Sn, Sr, Sc < 0.005%.

Hinsichtlich des Lötbauteils hat es sich als besonders vorteilhaft erwiesen, dass die "Brown-Band"-Schicht mehr als 30%, vorzugsweise mehr als 40% der Banddicke einnimmt. Wie im Rahmen dieser Weiterbildung erkannt wurde führt eine "Brown-Band"-Schicht dieser Dicke in besonders bevorzugter Weise dazu, dass eine Festigkeit des Lötbauteils zusätzlich zur vorteilhaften Korrosionsbeständigkeit in besonders vorteilhafter Weise erhalten bzw. erhöht wird.

Hinsichtlich der Korrosionsbeständigkeit hat es sich darüber hinaus als besonders vorteilhaft erwiesen, dass die Kernschicht in höherem Maße elektropositiv ist als die "Brown-Band"-Schicht. Insbesondere ist es vorteilhaft, dass die Kernschicht um ein Maß von mindestens 5mV, vorzugsweise mindestens 10mV, elektropositiver ist als die "Brown-Band"-Schicht.

Eine besonders vorteilhafte Wirkung hinsichtlich Korrosionsbeständigkeit und Materialfestigkeit wird dadurch erreicht, dass wenigstens zwischen 50% bis 80% der Gesamtdicke von Kernschicht und "Brown-Band"-Schicht zusammen von der Kernschicht eingenommen wird.

Im Rahmen einer bevorzugten ersten weiterbildenden Variante der Erfindung hat es sich darüber hinaus als vorteilhaft erwiesen, dass auf wenigstens einer Seite der Kernschicht die zweite Aluminiumlegierung der Plattierungsschicht und/oder eine weitere Schicht mit einer weiteren Aluminiumlegierung mit einem Anteil von Zn oberhalb von 0,2%, insbesondere oberhalb von 0,5%, insbesondere oberhalb von 1 % gebildet ist. Diese Variante hat sich als besonders bevorzugt erwiesen für den Fall, dass das Lötbauteil in Form eines Rohres gebildet ist. Vorteilhafterweise ist die mit einem erhöhten Zinkanteil versehene Plattierungsschicht und/oder die weitere Schicht auf der fluiddurchströmten Seite der Kernschicht des Rohres angeordnet.

Im Rahmen einer weiterbildenden besonders bevorzugten zweiten Variante der Erfindung ist auf wenigstens einer Seite der Kernschicht eine weitere Schicht aus Reinaluminium gebildet. Wie bei der ersten Variante ist dies im Falle eines Rohres vorteilhaft, vor allem auf der fluiddurchströmten Seite der Kernschicht der Fall. Als besonders bevorzugt hat sich eine Aluminiumlegierung der 1000er-Serie erwiesen. Beispielsweise haben sich eine AA1050 Aluminiumlegierung oder eine AA1100 Aluminiumlegierung als vorteilhaft erwiesen.

Das Konzept der Erfindung kann im Rahmen von Weiterbildungen bei einem Lötbauteil grundsätzlich in Form von verschiedenen Schichtanordnungen und Plattierungsanordnungen realisiert sein wie beispielsweise einseitige oder zweiseitige Anbringung einer Plattierungsschicht auf einer Kernschicht.

Darüber hinaus lässt sich das Konzept der Erfindung im Rahmen von Weiterbildungen vorteilhaft anwenden auf unterschiedlichste Lötbauteile, wie beispielsweise die Anbringung von Strömungsleitelementen an Strömungskanälen eines Wärmetauschers oder Rohren, insbesondere Flachrohren oder Scheiben eines Wärmetauschers.

Das Konzept der Erfindung führt auch auf einen Wärmetauscher, insbesondere Heizkörper oder Kühlmittelkühler oder Abgas- und/oder Ladeluft-Wärmetauscher, zum Wärmetausch zwischen einem ersten Fluid einerseits, insbesondere Luft, einem Abgas und/oder einer Ladeluft, und einem zweiten Fluid andererseits, insbesondere einem Kühlmittel, aufweisend:
einen Block zur voneinander getrennten und wärmetauschenden Führung des ersten und des zweiten Fluids, mit
   - einer Anzahl von dem ersten Fluid durchströmbaren Strömungskanälen;
   - eine erste die Strömungskanäle aufnehmende, von dem zweiten Fluid durchströmbare Kammer
   - ein Gehäuse, in dem die Kammer und die Strömungskanäle angeordnet sind;
wobei erfindungsgemäß wenigstens ein Bauteil in Form eines Lötbauteils nach dem Konzept der Erfindung gebildet ist.

Das Konzept der Erfindung führt darüber hinaus auf die Verwendung des Wärmetauschers der vorgenannten Art als Heizkörper oder Verdampfer oder Kühlmittelkühler oder Ölkühler oder Kondensator oder Abgas- und/oder Ladeluftkühler zur Abgas- und/oder Ladeluftkühlung in einem Abgasrückführ- und/oder Ladeluftzuführsystem einer Brennkraftmaschine eines Kraftfahrzeugs.

Vorteilhaft ist, dass eine Kernhauptschicht einen höheren Cu-Anteil aufweist als eine Kernseitenschicht.

Vorteilhaft ist, dass die erste Aluminiumlegierung der Kernschicht eine Aluminiumlegierung mit wesentlichen Anteilen von Mn und/oder Mg ist, insbesondere die erste Aluminiumlegierung der Kernschicht eine Aluminiumlegierung der 3000er-Serie (AA3xxx) und/oder 5000er-Serie (AA5xxx) und/oder 6000er-Serie (AA6xxx) ist.

Vorteilhaft ist, dass die erste Aluminiumlegierung der Kernschicht mit Anteilen von Si zwischen 0 und 0.25%, insbesondere Anteilen von Si zwischen 0 und 0.15% gebildet ist, insbesondere Anteilen von Si zwischen 0.1% und 0.25%.

Vorteilhaft ist, dass die erste Aluminiumlegierung der Kernschicht wenigstens Anteile wie folgt aufweist:
Si 0-0.4%, insbesondere 0-0.25%, insbesondere 0-0.15%, insbesondere 0.1%-0.25%;
Fe 0-0.8%, insbesondere 0-0.15%, insbesondere 0-0.08%, insbesondere 0.05%-0.15%;
Cu 0.1-1.0%, insbesondere 0.4-0.8%;
Mn 0.5-2.5%, insbesondere 0.7-1.5%.

Vorteilhaft ist, dass die erste Aluminiumlegierung der Kernschicht weiter Anteile wie folgt aufweist:
Mg < 0.8%, insbesondere < 0.6%;
Ti < 0.2%, insbesondere < 0.1%.

Vorteilhaft ist, dass die erste Aluminiumlegierung der Kernschicht weiter Anteile wie folgt aufweist:
Cr, Zr, V, Zn < 0.05%;
Sn, Sr, Sc < 0.005%.

Vorteilhaft ist, dass die "Brown-Band"-Schicht nicht mehr als 95%, insbesondere nicht mehr als 80%, der Banddicke einnimmt.

Vorteilhaft ist, dass die "Brown-Band"-Schicht mehr als 20%, insbesondere mehr als 30%, der Banddicke einnimmt.

Vorteilhaft ist, dass die "Brown-Band"-Schicht zu überwiegendem Teil aus der Kernseitenschicht einer Ursprungsdicke gebildet ist.

Vorteilhaft ist, dass die Kernschicht in höherem Maße elektropositiv ist als die "Brown-Band"-Schicht, insbesondere um ein Maß von mindestens 5mV, vorzugsweise mindestens 10mV, elektropositiver ist als die "Brown-Band"-Schicht.

Vorteilhaft ist, dass auf wenigstens einer Seite der Kernschicht, insbesondere im Falle eines Rohres auf der fluiddurchströmten Seite der Kernschicht, die zweite Aluminiumlegierung der Plattierungsschicht und/oder eine weitere Schicht mit einer weiteren Aluminiumlegierung gebildet ist, aufweisend einen Anteil von Zn oberhalb von 0.2%, insbesondere oberhalb von 0.5%, insbesondere oberhalb von 1%.

Vorteilhaft ist, dass auf wenigstens einer Seite der Kernschicht, insbesondere im Falle eines Rohres auf der fluiddurchströmten Seite der Kernschicht, eine weitere Schicht aus Reinaluminium gebildet oder aus Aluminium einer Aluminiumlegierung der 1000er-Serie, insbesondere einer AA1050 Aluminiumlegierung oder einer AA1100 Aluminiumlegierung gebildet ist.

Vorteilhaft ist, dass wenigstens ein zweiter Teil der Banddicke von wenigstens einer Plattierungsschicht einer Restdicke einer zweiten Aluminiumlegierung eingenommen wird, die beidseitig der Kernschicht angeordnet ist.

Vorteilhaft ist ein Bauteil in Form eines Rohres, insbesondere eines Flachrohres, insbesondere Mehrkammerflachrohres gebildet, aufweisend:
- eine sich gegenüberliegende erste und zweite Breitwand, die über eine sich gegenüberliegende, jeweils einen Umformbereich bildende erste und zweite Schmalwand miteinander verbunden sind, wobei die Breit- und Schmalwände Außenseiten des Profils bilden
- die erste und die zweite Breitwand mit einem wenigstens zwei Kammern des Profils trennenden, eine Innenseite und/oder Außenseite des Profils bildenden Steg verbunden sind.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, innerhalb des Schutzumfangs der Ansprüche.

Im Einzelnen zeigt die Zeichnung in:
- Fig. 1:: in Ansicht (A) zwei nicht erfindungsgemäße Ausgestaltungen (1), (2) und eine erfindungsgemäße Ausführungsform (3) eines Aluminium-bandes 100, 200, 300 vor dem Löten mit schematisch dargestelltem Schichtaufbau und in Ansicht (B) entsprechend zwei nicht erfin-dungsgemäße Ausgestaltungen (1), (2) und eine erfindungsgemäße Ausführungsform (3) eines daraus resultierenden Lötbauteils 100', 200', 300';
- Fig. 2:: in Ansicht (A) Materialeigenschaften von zwei Proben der nicht erfindungsgemäßen Ausgestaltungen (1), (2) hinsichtlich "Brown-Band"-Schichtanteil von der Gesamtdicke und in Ansicht (B) Festigkeit der Proben nach dem Löten bezogen auf den "Brown-Band"-Schichtdickenanteil an der Gesamtdicke;
- Fig. 3:: beispielhafte Messungen von "Brown-Band"-Schichtdicken an den Proben der nicht erfindungsgemäßen Ausgestaltungen (1), (2) bei unterschiedlichen Lötbedingungen, welche zeigen, dass in vorteilhafter Weise die "Brown-Band"-Schichtdicke mit zunehmender Löttemperatur und Lötzeit zunimmt;
- Fig. 4:: berechnete Siliziumdiffusionstiefen im Vergleich zu gemessenen "Brown-Band"-Schichtdicken mit zunehmender Lötzeit, welche die experimentelle Tendenz der Fig. 3 bestätigt;
- Fig. 5:: Dehngrenzen-Messergebnisse bei unterschiedlichen Löttemperaturen und Lötzeiten, welche zeigen, dass mit zunehmender Dicke der "Brown-Band"-Schicht höhere Fließspannungen des Materials gemäß dem Konzept der Erfindung erreicht werden.

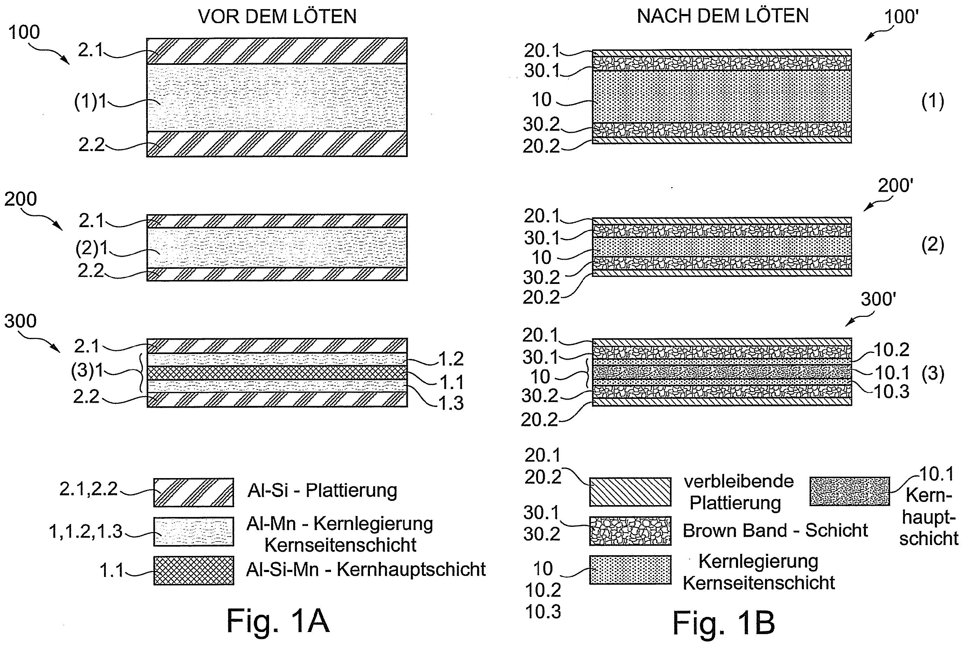

Fig. 1 zeigt zwei nicht erfindungsgemäße Ausgestaltungen und ein erfindungsgemäßes Ausführungsbeispiel jeweils eines Aluminiumbandes und eines zugehörigen Lötbauteils, welches durch Löten des Aluminiumbandes entsteht.

Gleiche Teile oder Merkmale oder Teile oder Merkmale gleicher Funktion sind im Übrigen der Einfachheit halber mit gleichen Bezugszeichen versehen.

Ansicht (B) der Fig. 1 zeigt in den zwei nicht erfindungsgemäßen Ausgestaltungen (1), (2) und in dem erfindungsgemäßen Ausführungsbeispiel (3) jeweils ein Lötbauteil 100', 200', 300', welches durch einen Lötprozess aus dem Aluminiumband 100, 200, 300 gemäß der in Ansicht (A) der Fig. 1 gezeigten zwei nicht erfindungsgemäßen Ausgestaltungen (1), (2) und in dem erfindungsgemäßen Ausführungsbeispiel (3) hervorgegangen ist. Es ist ersichtlich, dass jeweils nach dem Lötprozess eine Schicht mit Restlot verbleibt, d.h. eine Plattierungsschicht 20.1, 20.2 einer Restdicke mit einer zweiten Aluminiumlegierung verbleibt bzw. eine Kernschicht 10 einer Restdicke mit einer ersten Aluminiumlegierung verbleibt. Zwischen einer Kernschicht 10 und einer Restlotschicht, d.h. Plattierungsschicht 20.1, 20.2 der verbleibenden Restdicke, hat sich während des Lötprozesses durch Diffusion des Si aus der Plattierungsschicht 20.1, 20.2 eine "Brown-Band"-Schicht 30.1, 30.2 gebildet, welche entsprechend den eingangs erläuterten Vorteilen und wie in EP 0 691 898 A1 im Einzelnen aufgezeigt eine vergleichsweise hohe Korrosionsbeständigkeit hat. Gemäß dem Konzept der Erfindung ist bei den vorliegend verwendeten vergleichsweise dünnen Materialdicken von 370µm in der Ausgestaltung (1) bzw. 260µm in der Ausgestaltung (2) sichergestellt, dass nach dem Lötprozess ein Bereich von noch wenigstens 5% der Gesamtbanddicke verbleibt, welche durch die erste Aluminiumlegierung der Kernschicht 10 eingenommen wird.

In einer Variante kann die Schichtabfolge der zwei nicht erfindungsgemäßen Ausgestaltungen (1), (2) und des erfindungsgemäßen Ausführungsbeispiels (3) auch einseitig, also nicht im Rahmen einer Sandwich-Struktur verwirklicht sein, d.h. gegebenenfalls ohne weitere Plattierungsschicht 2.2, 20.2 und ohne weitere Kernseitenschicht 1.3, 10.3.

Während jedoch bislang im Stand der Technik die "Brown-Band"-Schicht lediglich als Opferschicht zur Korrosionshemmung beschrieben ist, hat das Konzept der vorliegenden Erfindung erkannt, dass die "Brown-Band"-Schicht 30.1, 30.2 gerade bei vorliegend vergleichsweise geringen Materialdicken zusätzlich genutzt werden kann, um die Festigkeit des Lötbauteils zu verbessern. Dazu ist vorliegend die "Brown-Band"-Schicht 30.1, 30.2 mit einem signifikanten Anteil von mehr als 30% bis 40% der Gesamtdicke des Lötbauteils 100', 200', 300' ausgebildet.

Ein Aluminiumband 100, 200, 300 der zwei nicht erfindungsgemäßen Ausgestaltungen (1), (2) und des erfindungsgemäßen Ausführungsbeispiels (3) der Ansicht (A) in Fig. 1 kann grundsätzlich auf konventionelle Weise durch Kalt- oder Heißwalzen erzeugt und plattiert werden, beispielsweise durch Prozeduren wie sie in US 5,037,707, EP 0 326 337 oder EP 0 691 898 beschrieben sind. Es kann auch durch moderne Methoden, wie z.B. durch ein simultanes Gießverfahren, bei dem Kernschicht und Plattierungsschicht simultan gegossen werden, erzeugt werden.

Vorliegend wird im Rahmen der hier gezeigten Ausführungsform das Aluminiumband heißgewalzt und nach dem Schälen ohne die Notwendigkeit eines weiteren Homogenisierungsschritts plattiert. Das Heißwalzen wird bei Temperaturen zwischen 560°C und 450°C oder gegebenenfalls auch bei Temperaturen bis hinunter zu 440°C ausgeführt. Ein Anlassen oder Glühen während eines Kaltwalzschrittes wird vorliegend in bevorzugter Weise vermieden, außer bei Legierungen mit vergleichsweise hohem Cu-Anteil, bei denen ein Anlassen oder Glühen bei etwa 220°C bis 480°C erfolgen kann.

Im Stand der Technik wie der US 5,037,707, EP 0 326 337 oder EP 0 691 898 sind grundsätzlich Legierungen angegeben, die in einer Kernschicht 1 oder Plattierungsschicht 2.1, 2.2 in geeigneter Weise verwendet werden können. Die im Stand der Technik angegebenen Legierungen der Kernschicht haben einen vergleichsweise geringen Silizium- und Eisenanteil, um die kontrollierte Bildung einer "Brown-Band"-Schicht während des Lötprozesses bestmöglich zu unterstützen. Zwar erweisen sich die in den US 5,037,707, EP 0 326 337 und EP 0 691 898 angegebenen Legierungen als grundsätzlich geeignet auch im Rahmen des allgemeinen Konzepts der vorliegenden Erfindung und der Offenbarungsgehalt der genannten Druckschriften wird hiermit in den Offenbarungsgehalt der vorliegenden Anmeldung aufgenommen. Dennoch ist vorliegend in einer darüber hinausgehenden Weiterbildung des Konzepts der Erfindung erkannt worden, dass eine "Brown-Band"-Schicht 30.1, 30.2 - welche bislang lediglich als Opferschicht behandelt wurde - gerade für den Fall einer besonders langlebigen Korrosionsbeständigkeit und in Anwendung bei vergleichsweise dünnen Materialdicken vergleichsweise gut ausgebildet werden sollte, d.h. mehr als 20% der Banddicke einnehmen sollte, wobei jedoch nach dem Lötprozess im Bereich der Lötverbindung noch wenigstens 5% der Banddicke verbleibt, welche durch die Aluminiumlegierung der Kernschicht eingenommen wird.

Im Rahmen der vorliegenden Ausführungsform weist die Legierung der Kernschicht 1 Anteile wie folgt auf: Si 0-0.4%, Fe 0-0.8%, Cu 0.1-1.0%, insbesondere 0.4-0.8%, Mn 0.5-2.5%, Mg < 0.8%, Ti < 0.2%, Cr, Zr, V, Zn < 0.05% und Sn, Sr, Sc < 0.005%.

Dabei ist zu bemerken, dass durchaus Fe-Anteile bis zu 0,15% und Siliziumanteile bis zu 0,25% gewünscht sind, um eine vergleichsweise gute Ausbildung der "Brown-Band"-Schicht zu ermöglichen. Gleichwohl sind Si-Anteile zwischen 0.1 und 0,15% und Fe-Anteile zwischen 0.5 und 0,08% besonders bevorzugt.

Ein Cu-Anteil dient in besonders vorteilhafter Weise zur Erhöhung der Festigkeit und kann zwischen 0.1 und 1,0% betragen. Besonders bevorzugt ist ein Cu-Anteil zwischen 0,4 und 0,8%. Unterhalb von einem Cu-Anteil von 0.4% ist der festigkeitserhöhende Effekt nicht besonders ausgeprägt und oberhalb eines Cu-Anteils von 0,8% ist die Tendenz der Bildung intermetallischer Phasen vergleichsweise hoch, was bei den im Rahmen des Konzepts der Erfindung vorliegenden dünnen Materialschichten in Walzprozesse noch nicht optimal ist. Korngrößen verfeinernde Materialien wie Cr, Zr, V, Sn, Sr, Sc sind praktisch nicht oder nur in geringeren Mengen vorhanden. Es wurde erkannt, dass solche Elemente zu vermeiden sind, weil sie insbesondere den Recycling-Prozess od.dgl. erschweren. Dagegen sind Materialien wie Mn zur Verbesserung der Lötbarkeit, Mg zur Verbesserung der Festigkeit und korngrößenbeeinflussende Materialien wie Ti gemäß der vorliegenden Ausführungsform gemäß dem Konzept der Erfindung erwünscht.

Eine Legierung der Plattierungsschicht 2.1, 2.2 enthält gemäß den vorliegenden Ausführungsformen einen Si-Anteil zwischen 7,5 und 15%. Der in der Plattierungsschicht im Vergleich zur Kernschicht wesentlich höhere Si-Anteil führt zur Diffusion des Si in die Kernschicht und zur Ausbildung eines besonders vorteilhaften "Brown-Bands" bei geringeren Materialdicken gemäß dem Konzept der Erfindung. Vorliegend handelt es sich im nicht erfindungsgemäßen Beispiel (1) um eine AA4045 Aluminiumlegierung in der Plattierungsschicht und im nicht erfindungsgemäßen Beispiel (2) und im Ausführungsbeispiel (3) um eine AA4343 Aluminiumlegierung in der Plattierungsschicht.

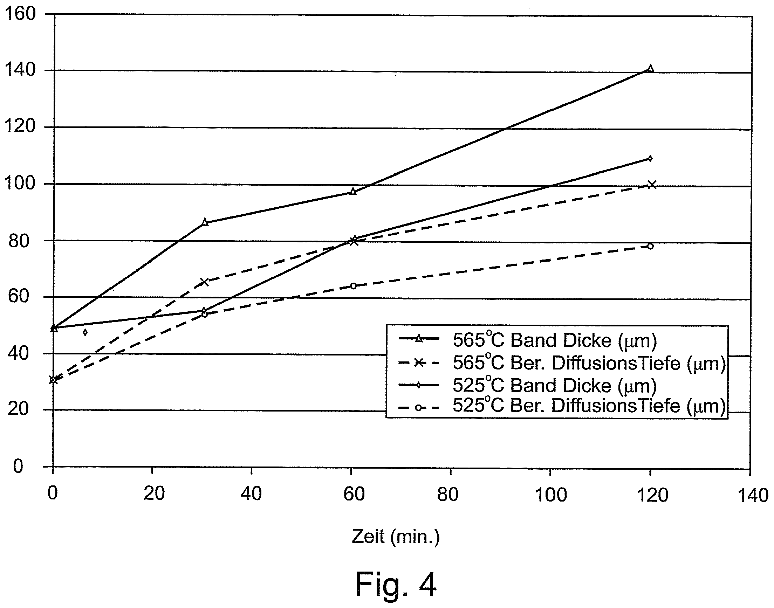

So ist im nicht erfindungsgemäßen Beispiel (1) ein Aluminiumband 100 mit Plattierung in einer Gesamtdicke von 370µm gebildet und im nicht erfindungsgemäßen Beispiel (2) und im Ausführungsbeispiel (3) ein Aluminiumband mit Plattierungsschicht in einer Gesamtdicke von 260µm gebildet - Ansicht (A) der Fig. 4.

Fig. 1 zeigt dazu die nicht erfindungsgemäßen Beispiele (1) und (2) jeweils mit einer Kernschicht 1 und vorliegend beidseitiger Plattierungsschicht 2.1 und 2.2. Die Kernschicht 1 weist eine Aluminiumlegierung der oben erläuterten Art auf. Die Plattierungsschicht weist eine Aluminiumlegierung wie oben erläutert auf.

Im Ausführungsbeispiel (3) wird die Kernschicht 1 mehrschichtig gebildet durch eine Kernhauptschicht 1.1 sowie beidseitig zur Kernhauptschicht angeordneten Kernseitenschichten 1.2, 1.3.

Die erfindungsgemäße dritte Ausführungsform (3) hat sich als besonders bevorzugt bei vergleichsweise dünnen Materialdicken erwiesen. Die Kernhauptschicht 1.1 bzw. 10.1 kann so unmittelbar benachbart zu einer beim Lötprozess ausgebildeten - Ansicht (B) der Fig. 1 - "Brown-Band"-Schicht 30.1, 30.2 sein und deutlich getrennt von der Plattierungsschicht sein, nämlich getrennt durch die Kernseitenschichten 1.2 und 1.3 bzw. 10.2 und 10.3. Die Legierung der Kernhauptschicht 1.1, 10.1 ist vorliegend gebildet durch eine Legierung, welche zur Bildung einer "Brown-Band"-Schicht praktisch ungeeignet ist bzw. die Bildung einer "Brown-Band"-Schicht deutlich hemmt. Entsprechend hat es sich als besonders bevorzugt erwiesen die vorliegend zentrale Kernzwischenschicht 1.1, 10.1 elektropositiver, vorliegend um wenigstens 5 mV, insbesondere 10 mV elektropositiver zu gestalten, als die "Brown-Band"-Schicht 30.1, 30.2. In einer besonders bevorzugten Ausführungsform wird dies durch einen im Vergleich zur Kernseitenschicht erhöhten Cu-Anteil in der Kernhauptschicht - vorteilhaft einen um mindestens 0.1% erhöhten Cu-Anteil - erreicht. Es kann in einer Abwandlung auch zusätzlich zwischen der Kernhauptschicht 1.1, 10.1 und der Kernseitenschicht 2.1, 20.1 bzw. 2.2, 20.2 und/oder zwischen der Kernschicht 1, 10 und der Plattierungsschicht 2, 20 eine weitere Schicht, z.B. eine Diffusionssperrschicht angeordnet sein.

Die Kernhauptschicht 1.1, 10.1 ist hinsichtlich der zu verwendenden Aluminiumlegierung nicht so kritisch wie die Auslegung der Kernseitenschicht 1.2, 1.3 bzw. 10.2, 10.3 solange die Aluminiumlegierung der Kernhauptschicht 1.1, 10.1 geeignet ist, die Bildung einer "Brown-Band"-Schicht zu verhindern oder jedenfalls zu hemmen. Insbesondere sind die Fe-Anteile einer Aluminiumlegierung der Kernhauptschicht 1.1, 10.1 sehr gering bzw. nicht vorhanden. Es eignen sich vor allem Aluminiumlegierungen der 3000er-Serie (AA3xxx), der 5000er-Serie (AA5xxx) oder der 6000er-Serie (AA6xxx).

Es hat sich gezeigt, dass durch die oben beschriebene Verwendung der bevorzugten Aluminiumlegierung in der Kernschicht 1 und den siliziumreichen Legierungsoptionen in der Plattierungsschicht 2.1, 2.2 sich eine Legierungszusammensetzung in der "Brown-Band"-Schicht 30.1, 30.2 bildet, welche gleichermaßen vorteilhaft ist zum Erhalt einer Korrosionsbeständigkeit und Festigkeit des Materials. Dazu kann insbesondere die Diffusion von Si in die "Brown-Band"-Schicht 30.1, 30.2 beitragen. Gemäß dem Konzept der Erfindung ist bei der vorliegenden Ausführungsform vorgesehen, in der ersten Aluminiumlegierung der Kernschicht 1 einen Mn-Anteil im Bereich von 0.5 bis 2.5% vorzusehen. Eine Durchkorrosion wird vermieden, da durch die Auslegung der Dicke der Kernschicht 1 und der Plattierungsschicht 2.1, 2.2 beim Aluminiumband 100, 200, 300 verhindert wird, dass sich eine "Brown-Band"-Schicht vollständig durch das Material des Lötbauteils 100', 200', 300' erstreckt. Dies wird besonders bedeutend bei der vergleichsweise geringen Dicke von 260µm der Lötbauteile 200', 300' in dem nicht erfindungsgemäßen Beispiel (2) und in dem Ausführungsbeispiel (3). Bei derart geringen Materialdicken oder geringeren Materialdicken unterhalb von 200µm oder unterhalb von 150µm ist die Gefahr einer sich durch die gesamte Materialdicke erstreckenden "Brown-Band"-Schicht wirksam verhindert, indem gemäß Ausführungsbeispiel (3) ein Lötbauteil 300' vorgesehen ist, welches aus einem Aluminiumband 300 wie in Ansicht der Fig. 1 gezeigt, hervorgeht. Wie erläutert, weist die Kernhauptschicht bei der vorliegenden Ausführungsform (3) in bevorzugter Weise eine Al-Si-Mn-Legierung auf, welche das etwaige Fortschreiten einer "Brown-Band"-Schicht wirksam hemmt.

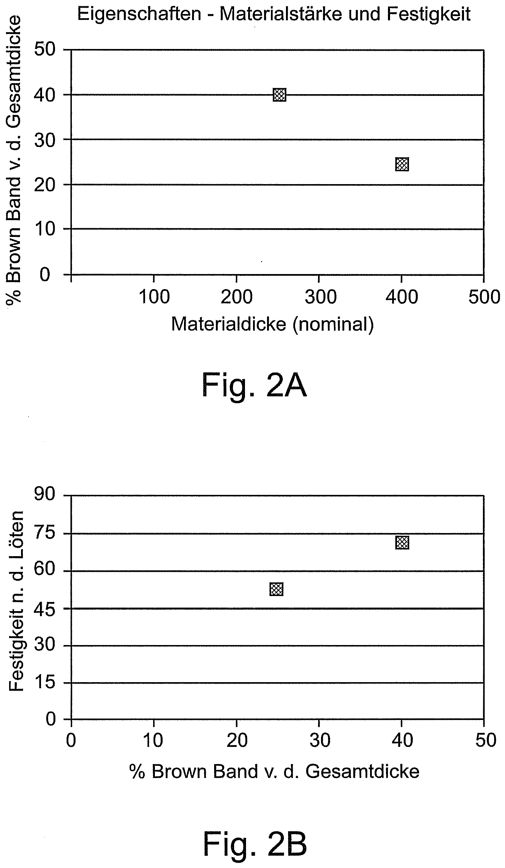

Die Eigenschaften der Proben, wie sie in den nicht erfindungsgemäßen Beispielen (1) und (2) gezeigt sind, werden im Folgenden anhand von Fig. 2 bis Fig. 5 beschrieben.

Fig. 2 zeigt in Ansicht (A), dass der Anteil der "Brown-Band"-Schicht 30.1, 30.2 aus der Gesamtmaterialdicke des Lötbauteils 100', 200' vorliegend etwa 25% bzw. 40% beträgt. In Ansicht (B) der Fig. 2 ist zu erkennen, dass die Festigkeit nach dem Löten bei höherem Prozentanteil der "Brown-Band"-Schicht von der Gesamtdicke deutlich höher ist und im Übrigen auch bei geringerem Prozentanteil der "Brown-Band"-Schicht von der Gesamtdicke eine Festigkeitserhöhung nach dem Löten - im Vergleich zu Ergebnissen aus dem Stand der Technik - zu erwarten ist.

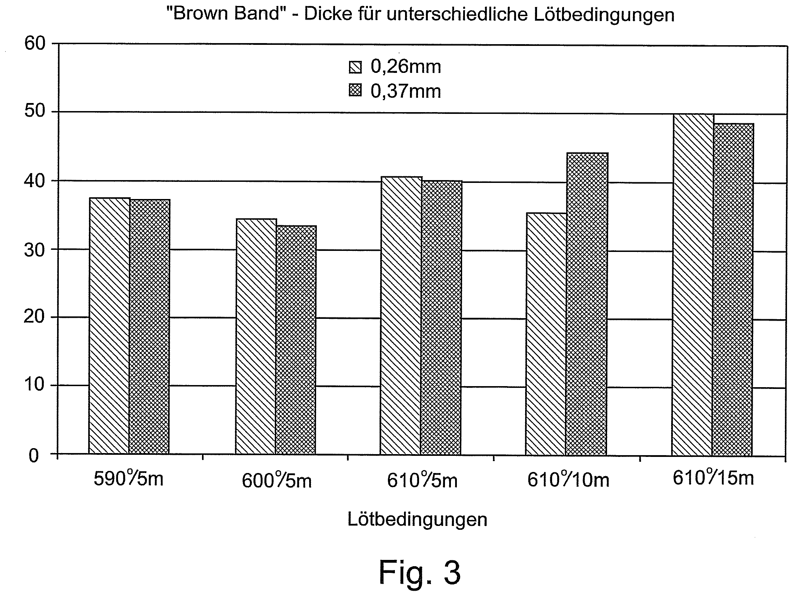

Die in Beispiel (1) und Beispiel (2) gezeigten Proben wurden einem Lötvorgang bei Temperaturen zwischen jeweils 590°C, 600°C und 610°C für unterschiedliche Zeitdauern von 5 Minuten, 10 Minuten oder 15 Minuten unterzogen. Die Ergebnisse, wie sie in Fig. 3 gezeigt sind, zeigen trotz Streuung, dass die Dicke einer "Brown-Band"-Schicht 30.1, 30.2 mit zunehmender Löttemperatur und zunehmender Lötzeit ansteigt. Dies ist in Übereinstimmung mit den in Fig. 4 gezeigten theoretischen Berechnungen einer Si-Diffusionsrate, welche im Vergleich zu den gemessenen Banddicken der "Brown-Band"-Schicht 30.1, 30.2 gezeigt ist.

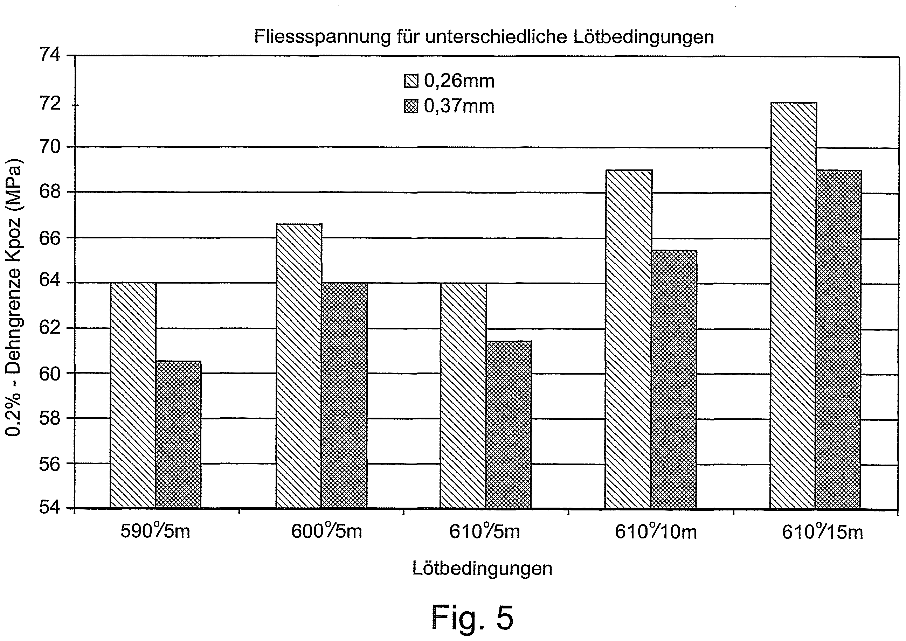

Fig. 5 zeigt die Messergebnisse für die Fließspannung bei den Lötbedingungen wie sie in Fig. 3 erläutert wurden. Konkret wurde die 0,2%-Dehngrenze R**_{p 0,2}** in MPa gemessen. Es ist ersichtlich, dass die Fließspannung zunimmt mit zunehmender Löttemperatur und zunehmender Lötzeit. Dies wird auf die in Fig. 3 und Fig. 4 erläuterte Zunahme der Dicke der "Brown-Band"-Schicht 30.1, 30.2 zurückgeführt.

Darüber hinaus wurde in einer weiteren Messung der Effekt einer Erhöhung der Festigkeit durch die "Brown-Band"-Schicht 30.1, 30.2 experimentell bestätigt. Dazu wurden zwei Serien von Proben präpariert. Die eine Probe wurde mit einer konventionellen AA3003 Aluminiumlegierung versehen, welche die Bildung einer "Brown-Band"-Schicht verhindert, und mit einer AA4xxx Aluminiumlegierung auf beiden Seiten plattiert. Die Dicke der Plattierung wurde zwischen 5 und 10% der gesamten Materialdicke variiert. Die zweite Serie von Proben wurde präpariert mit der gleichen Plattierung und der Anordnung einer Kernschicht, welche jedoch gemäß dem Konzept der Erfindung grundsätzlich geeignet ist eine "Brown-Band"-Schicht zu bilden. Beide Probenserien wurden identischen Lötprozeduren und nachfolgenden Festigkeitsmessungen unterzogen. Die Dicke der "Brown-Band"-Schicht in der zweiten Probenserie wurde gemessen ebenso wie bei der ersten Probenserie. Die Messung ergab, dass bei der ersten Probenserie unter Verwendung der AA3003 Aluminiumlegierung praktisch keine "Brown-Band"-Entstehung vorlag, während die Probenserie gemäß dem Konzept der Erfindung eine "Brown-Band"-Entstehung zeigte mit deutlich erhöhten Festigkeitswerten für das Gesamtkompositmaterial.

### Bezugzeichenliste

- 1: Kernschicht
- 1.1: Kernzwischenschicht
- 1.2: Kernseitenschichten
- 1.3: Kernseitenschichten
- 2.1: Plattierungsschicht
- 2.2: Plattierungsschicht

- 10: Kernschicht
- 10.1: Kernzwischenschicht

- 20.1: Restlotschicht der verbliebenen Plattierungsschicht
- 20.2: Restlotschicht der verbliebenen Plattierungsschicht

- 30.1: Brown-Band-Schicht
- 30.2: Brown-Band-Schicht

- 100: Aluminiumband
- 200: Aluminiumband
- 300: Aluminiumband

- 100': Lötbauteil
- 200': Lötbauteil
- 300': Lötbauteil

## Patentansprüche

1. Lötbauteil (100', 200', 300') aus einem Aluminiumband (100, 200, 300), insbesondere ein Rohr oder eine Scheibe, welches ein Profil mit einer Lötverbindung aufweist, wobei das Aluminiumband (100, 200, 300) eine Banddicke aufweist und in wenigstens einem Bereich des Aluminiumbandes (100, 200, 300) im Bereich der vorgesehenen Lötverbindung:
- ein erster Teil der Banddicke von einer Kernschicht (1, 10) einer ersten Aluminiumlegierung eingenommen wird;
- wenigstens ein zweiter Teil der Banddicke von wenigstens einer Plattierungsschicht (2.1, 2.2, 20.1, 20.2) einer zweiten Aluminium-legierung eingenommen wird;
- die erste und zweite Aluminiumlegierung zur Bildung einer "Brown-Band"-Schicht (30.1, 30.2) während eines Lötprozesses ausgelegt sind;
- wobei die Kernschicht um ein Maß von mindestens 5mV elektropositiver ist als die "Brown-Band"-Schicht und wobei
- eine Banddicke des Aluminiumbandes (100, 200, 300) unterhalb von 500µm liegt und eine Dicke der Kernschicht (1, 10) und/oder eine Dicke der Plattierungsschicht (2.1, 2.2, 20.1, 20.2) derart ausgelegt ist, dass
- nach dem Lötprozess in dem wenigstens einen Bereich noch wenigstens 5% der Banddicke verbleibt, welche durch die erste Aluminiumlegierung der Kernschicht (1, 10) eingenommen wird und die "Brown-Band"-Schicht (30.1, 30.2) mehr als 20% der Banddicke einnimmt,
wobei die Kernschicht (1, 10) vor dem Lötvorgang mehrschichtig mit einer, vorzugsweise zentralen, Kernhauptschicht (1.1, 10.1) und wenigstens einer Kernseitenschicht (1.2, 1.3) ausgeführt ist, wobei die zweite Aluminiumlegierung der Plattierungsschicht (2.1, 2.2, 20.1, 20.2) eine Aluminiumlegierung der 4000er-Serie (AA4xxx) ist, insbesondere eine AA4343-, oder eine AA4045-, oder eine AA4047-, oder eine AA4004-, oder eine AA4104-Aluminiumlegierung ist und
wobei die Kernseitenschicht aus einer Aluminiumlegierung der 3000er-Serie (AA3XXX), der 5000er-Serie (AA5XXX) oder der 6000er-Serie (AA6XXX) besteht und wobei die Kernhauptschicht aus einer Aluminiumlegierung der 3000er-Serie (AA3XXX), der 5000er-Serie (AA5XXX) oder der 6000er-Serie (AA6XXX) besteht, wobei die Kernhauptschicht (1.1, 10.1) und die Kernseitenschicht (1.3) einen geringeren Anteil von Si als die Plattierungsschicht (2.1, 2.2, 20.1, 20.2) aufweisen
und die Kernhauptschicht (1.1, 10.1) einen höheren Si-Anteil aufweist als die Kernseitenschicht (1.2, 1.3) und wobei die "Brown-Band"-Schicht (30.1, 30.2) zu überwiegendem Teil aus der Kernseitenschicht (1.2, 1.3) einer Ursprungsdicke gebildet ist.

2. Lötbauteil (100', 200', 300') nach Anspruch 1, **dadurch gekennzeichnet, dass** die Banddicke unterhalb von 400µm, insbesondere unterhalb von 300µm, insbesondere unterhalb von 250µm, insbesondere unterhalb von 200µm, insbesondere unterhalb von 150µm, liegt.

3. Lötbauteil (100', 200', 300') nach Anspruch 1 oder 2, **dadurch gekennzeichnet, dass** noch wenigstens 10%, insbesondere wenigstens 20%, vorzugsweise zwischen 40% bis 50%, der Banddicke verbleibt, welche durch die erste Aluminiumlegierung der Kernschicht (1, 10) eingenommen wird.

4. Lötbauteil (100', 200', 300') nach einem der Ansprüche 1 bis 3, **dadurch gekennzeichnet, dass** die Dicke der Kernschicht (1, 10) und/oder die Dicke der Plattierungsschicht (2.1, 2.2, 20.1, 20.2) derart ausgelegt ist, dass die "Brown-Band"-Schicht (30.1, 30.2) mehr als 20%, insbesondere mehr als 30%, der Banddicke einnimmt.

5. Lötbauteil (100', 200', 300') nach einem der Ansprüche 1 bis 4, **dadurch gekennzeichnet, dass** die Plattierungsschicht (2.1, 2.2, 20.1, 20.2) und/oder die Kernschicht (1, 10) ausgelegt ist, die Bildung der "Brown-Band"-Schicht (30.1, 30.2) zu unterstützen.

6. Lötbauteil (100', 200', 300') nach einem der Ansprüche 1 bis 5, **dadurch gekennzeichnet, dass** die zweite Aluminiumlegierung der Plattierungsschicht (2.1, 2.2, 20.1, 20.2) mit Anteilen von Si zwischen 0.6% und 21%, insbesondere mit Anteilen von Si zwischen 6% und 15%, insbesondere mit Anteilen von Si zwischen 6% und 12%, gebildet ist.

7. Lötbauteil (100', 200', 300') nach einem der Ansprüche 1 bis 6, **dadurch gekennzeichnet, dass** die Kernschicht (1, 10) einen geringeren Anteil von Si als die Plattierungsschicht (2.1, 2.2, 20.1, 20.2) aufweist.

8. Lötbauteil (100', 200', 300') nach einem der Ansprüche 1 bis 7, **dadurch gekennzeichnet, dass** die Plattierungsschicht (2.1, 2.2, 20.1, 20.2) und/oder eine Kernseitenschicht (1.2, 1.3) ausgelegt ist, die Bildung der "Brown-Band"-Schicht (30.1, 30.2) zu unterstützen, insbesondere nur eine Kernhauptschicht (1.1) ausgelegt ist, die Bildung der "Brown-Band"-Schicht (30.1, 30.2) zu hemmen.

9. Lötbauteil (100', 200', 300') nach einem der Ansprüche 1 bis 8, **dadurch gekennzeichnet, dass** eine Kernhauptschicht (1.1, 10.1) einen geringeren Fe-Anteil aufweist als eine Kernseitenschicht (1.2, 1.3).

10. Herstellungsverfahren für ein Lötbauteil (100', 200', 300'), insbesondere ein Rohr oder eine Scheibe, nach einem der Ansprüche 1 bis 9 aufweisend die Schritte:
- Umformen eines Rohrbandes, insbesondere in einem Biege- und/oder Falt- und/oder Falzverfahren, bei dem ein, insbesondere geschlossenes, Profil gebildet wird;
- Löten in dem wenigstens einen Bereich unter Bildung der vorgesehenen Lötverbindung in dem Bereich;
- Bilden einer "Brown-Band"-Schicht (30.1, 30.2) aus der ersten und zweiten Aluminiumlegierung, während eines Lötprozesses;
- wobei die Kernschicht um ein Maß von mindestens 5mV elektropositiver ist als die "Brown-Band"-Schicht und wobei
- eine Dicke der Kernschicht (1, 10) und/oder eine Dicke der Plattierungsschicht (2.1, 2.2, 20.1, 20.2) derart ausgelegt sind, dass nach dem Lötprozess in dem wenigstens einen Bereich, insbesondere im Bereich der Lötverbindung, noch wenigstens 5% der Banddicke verbleibt, welche durch die erste Aluminium-Legierung der Kernschicht (1, 10) eingenommen wird und die "Brown-Band"-Schicht (30.1, 30.2) mehr als 20% der Banddicke einnimmt und wobei die Kernschicht (1, 10) mehrschichtig mit einer Kernhauptschicht (1.1, 10.1) und wenigstens einer Kernseitenschicht (1.2, 1.3) ausgeführt ist.

11. Wärmetauscher, insbesondere Abgas- und/oder Ladeluft-Wärmetauscher, zum Wärmetausch zwischen einem ersten Fluid einerseits, insbesondere einem Abgas und/oder einer Ladeluft, und einem zweiten Fluid andererseits, insbesondere einem Kühlmittel, aufweisend:
einen Block zur voneinander getrennten und wärmetauschenden Führung des ersten und des zweiten Fluids, mit
- einer Anzahl von dem ersten Fluid durchströmbaren Strömungskanälen;
- eine erste die Strömungskanäle aufnehmende, von dem zweiten Fluid durchströmbare Kammer
- ein Gehäuse, in dem die Kammer und die Strömungskanäle angeordnet sind;
**dadurch gekennzeichnet, dass**
wenigstens ein Lötbauteil nach einem der Ansprüche 1 bis 9 gebildet ist, insbesondere ein Strömungskanal in Form eines Rohres nach einem der Ansprüche 1 bis 9 gebildet ist.

12. Verwendung des Wärmetauschers nach Anspruch 11 als Heizkörper oder Verdampfer oder Kühlmittelkühler oder Ölkühler oder Kondensator oder Abgas- und/oder Ladeluft-Kühler zur Abgas- und/oder Ladeluftkühlung in einem Abgasrückführ- und/oder Ladeluftzuführ-System einer Brennkraftmaschine eines Kraftfahrzeugs.

## Claims

1. A brazing component (100', 200', 300') composed of an aluminium strip (100, 200, 300), in particular a tube or a disk, having a profile with a brazing connection, wherein the aluminium strip (100, 200, 300) has a strip thickness and, in at least one area of the aluminium strip (100, 200, 300), in the area of the intended brazing connection:
- a first part of the strip thickness is taken up by a core layer (1, 10) of a first aluminium alloy;
- at least a second part of the strip thickness is taken up by at least one plating layer (2.1, 2.2, 20.1, 20.2) of a second aluminium alloy;
- the first and the second aluminium alloy are configured to form a "brown band" layer (30.1, 30.2) during a brazing process;
- wherein the core layer is at least 5 mV more electropositive than the "brown band" layer, and wherein
- a strip thickness of the aluminium strip (100, 200, 300) is less than 500 µm, and a thickness of the core layer (1, 10) and/or a thickness of the plating layer (2.1, 2.2, 20.1, 20.2) is configured such that
- after the brazing process, at least 5% of the strip thickness that is taken up by the first aluminium alloy of the core layer (1, 10) still remains in the at least one area, and the "brown band" layer (30.1, 30.2) takes up more than 20% of the strip thickness, wherein the core layer (1, 10), before the brazing process, is configured to be multi-layered with one, preferably central, main core layer (1.1, 10.1) and at least one side core layer (1.2, 1.3), wherein the second aluminium alloy of the plating layer (2.1, 2.2, 20.1, 20.2) is an aluminium alloy of the 4000 series (AA4xxx), in particular an AA4343 or an AA4045 or an AA4047 or an AA4004 or an AA4104 aluminium alloy, and
wherein the side core layer consists of an aluminium alloy of the 3000 series (AA3XXX), of the 5000 series (AA5XXX) or of the 6000 series (AA6XXX) and wherein the main core layer consists of an aluminium alloy of the 3000 series (AA3XXX), of the 5000 series (AA5XXX) or of the 6000 series (AA6XXX), wherein the main core layer (1.1, 10.1) and the side core layer (1.3) have a lower portion of Si than does the plating layer (2.1, 2.2, 20.1, 20.2),
and the main core layer (1.1, 10.1) has a higher portion of Si than does the side core layer (1.2, 1.3), and wherein
the "brown band" layer (30.1, 30.2) is formed primarily of the side core layer (1.2, 1.3) having an original thickness.

2. The brazing component (100', 200', 300') according to claim 1, **characterised in that** the strip thickness is less than 400 µm, in particular less than 300 µm, in particular less than 250 µm, in particular less than 200 µm, in particular less than 150 µm.

3. The brazing component (100', 200', 300') according to claim 1 or 2, **characterised in that** at least 10%, in particular at least 20%, preferably between 40% to 50% of the strip thickness taken up by the first aluminium alloy of the core layer (1, 10) remains.

4. The brazing component (100', 200', 300') according to one of claims 1 to 3, **characterised in that** the thickness of the core layer (1, 10) and/or the thickness of the plating layer (2.1, 2.2, 20.1, 20.2) is configured such that the "brown band" layer (30.1, 30.2) takes up more than 20%, in particular more than 30% of the strip thickness.

5. The brazing component (100', 200', 300') according to one of claims 1 to 4, **characterised in that** the plating layer (2.1, 2.2, 20.1, 20.2) and/or the core layer (1, 10) is configured to support the formation of the "brown band" layer (30.1, 30.2).

6. The brazing component (100', 200', 300') according to one of claims 1 to 5, **characterised in that** the second aluminium alloy of the plating layer (2.1, 2.2, 20.1, 20.2) is formed with portions of Si between 0.6% and 21%, in particular with portions of Si between 6% and 15%, in particular with portions of Si between 6% and 12%.

7. The brazing component (100', 200', 300') according to one of claims 1 to 6, **characterised in that** the core layer (1, 10) has a lower portion of Si than does the plating layer (2.1, 2.2, 20.1, 20.2).

8. The brazing component (100', 200', 300') according to one of claims 1 to 7, **characterised in that** the plating layer (2.1, 2.2, 20.1, 20.2) and/or the side core layer (1.2, 1.3) is configured to support the formation of the "brown band" layer (30.1, 30.2), in particular only one main core layer (1.1) is configured to inhibit the formation of the "brown band" layer (30.1, 30.2).

9. The brazing component (100', 200', 300') according to one of claims 1 to 8, **characterised in that** a main core layer (1.1, 10.1) has a lower portion of Fe than does a side core layer (1.2, 1.3).

10. A manufacturing method for a brazing component (100', 200', 300'), in particular for a tube or a disk, according to one of claims 1 to 9, comprising the steps:
- reshaping a tubular strip, in particular using a curving process and/or a folding process and/or a bending process in which an - in particular - closed profile is formed;
- brazing in the at least one area and thereby forming the intended brazing connection in the area;
- forming a "brown band" layer (30.1, 30.2) out of the first and the second aluminium alloy during a brazing process;
- wherein the core layer is at least 5 mV more electropositive than the "brown band" layer, and wherein
- a thickness of the core layer (1, 10) and/or a thickness of the plating layer (2.1, 2.2, 20.1, 20.2) is configured such that, after the brazing process, at least 5% of the strip thickness that is taken up by the first aluminium alloy of the core layer (1, 10) still remains in the at least one area, in particular in the area of the brazing connection, and the "brown band" layer (30.1, 30.2) takes up more than 20% of the strip thickness, and wherein the core layer (1, 10) is designed in several layers with one main core layer (1.1, 10.1) and at least one side core layer (1.2, 1.3).

11. A heat exchanger, in particular an exhaust-gas and/or charge-air heat exchanger, to exchange heat between a first fluid, in particular an exhaust gas and/or charge air, on the one hand, and a second fluid, in particular a coolant, on the other hand, having:
- a block for guiding the first and the second fluid such that they are separated from one another and exchange heat, with
- a number of flow channels through which the first fluid can flow;
- a first chamber which accommodates the flow channels and through which the second fluid can flow;
- a housing in which the chamber and the flow channels are disposed;
**characterised in that**
at least one brazing component is formed according to one of claims 1 to 9, in particular a flow channel is formed in the form of a tube according to one of claims 1 to 9.

12. Use of the heat exchanger according to claim 11 as a heater core or evaporator or coolant radiator or oil cooling system or condenser or exhaust-gas and/or charge-air heat exchanger for cooling exhaust gas and/or charge air in an exhaust-gas recirculation system and/or charge-air supply system of an internal combustion engine of a motor vehicle.

## Revendications

1. Composant de brasage (100', 200', 300') formé à partir d'une bande d'aluminium (100, 200, 300), en particulier un tube ou une plaque, lequel composant de brasage présente un profil réalisé avec un assemblage par brasage, où la bande d'aluminium (100, 200, 300) présente une épaisseur de bande et, dans au moins une zone de la bande d'aluminium (100, 200, 300) située dans la zone de l'assemblage par brasage prévu :
- une première partie de l'épaisseur de la bande est occupée par une couche de noyau (1, 10) d'un premier alliage d'aluminium ;
- au moins une deuxième partie de l'épaisseur de la bande est occupée par au moins une couche de placage (2.1, 2.2, 20.1, 20.2) d'un second alliage d'aluminium ;
- le premier et le second alliage d'aluminium sont conçus pour la formation d'une couche à "bande brune" (30.1, 30.2) au cours d'un processus de brasage ;
- où la couche de noyau est d'une valeur au moins de 5 mV plus électropositive que la couche à "bande brune" et
- où une épaisseur de la bande d'aluminium (100, 200, 300) est inférieure à 500 pm, et une épaisseur de la couche de noyau (1, 10) et / ou une épaisseur de la couche de placage (2.1, 2.2, 20.1, 20.2) sont conçues de manière telle, que
- après le processus de brasage, il subsiste, dans la zone au moins au nombre de un, encore au moins 5 % de l'épaisseur de bande qui est occupée par le premier alliage d'aluminium de la couche de noyau (1, 10), et la couche à "bande brune" (30.1, 30.2) occupe plus de 20 % de l'épaisseur de la bande,
où la couche de noyau (1, 10) est réalisée, avant le processus de brasage, en étant multicouche et en comprenant une couche principale de noyau (1.1, 10.1), de préférence centrale, et en comprenant au moins une couche latérale de noyau (1.2, 1.3), où le second alliage d'aluminium de la couche de placage (2.1, 2.2, 20.1, 20.2) est un alliage d'aluminium de la série 4000 (AA4xxx), en particulier un alliage d'aluminium AA4343 ou AA4045 ou AA4047 ou AA4004 ou AA4104, et
où la couche latérale de noyau se compose d'un alliage d'aluminium de la série 3000 (AA3XXX), de la série 5000 (AA5XXX) ou de la série 6000 (AA6XXX), et où la couche principale de noyau se compose d'un alliage d'aluminium de la série 3000 (AA3XXX), de la série 5000 (AA5XXX) ou de la série 6000 (AA6XXX),
où la couche principale de noyau (1.1, 10.1) et la couche latérale de noyau (1.3) présentent une proportion de Si plus faible que celle de la couche de placage (2.1, 2.2, 20.1, 20.2),
et la couche principale de noyau (1.1, 10.1) présente une proportion de Si plus élevée que celle de la couche latérale de noyau (1.2, 1.3), et
où la couche à "bande brune" (30.1, 30.2) est formée en se composant, en majeure partie, de la couche latérale de noyau (1.2, 1.3) ayant une épaisseur initiale.

2. Composant de brasage (100', 200', 300') selon la revendication 1, **caractérisé en ce que** l'épaisseur de la bande est inférieure à 400 pm, en particulier inférieure à 300 pm, en particulier inférieure à 250 pm, en particulier inférieure à 200 pm, en particulier inférieure à 150 pm.

3. Composant de brasage (100', 200', 300') selon la revendication 1 ou 2, **caractérisé en ce qu'**il subsiste encore au moins 10 %, en particulier au moins 20 %, de préférence entre 40 % et 50 % de l'épaisseur de bande qui est occupée par le premier alliage d'aluminium de la couche de noyau (1, 10).

4. Composant de brasage (100', 200', 300') selon l'une quelconque des revendications 1 à 3, **caractérisé en ce que** l'épaisseur de la couche de noyau (1, 10) et / ou l'épaisseur de la couche de placage (2.1, 2.2, 20.1, 20.2) est conçue de manière telle, que la couche à "bande brune" (30.1, 30.2) occupe plus de 20 %, en particulier plus de 30 %, de l'épaisseur de la bande.

5. Composant de brasage (100', 200', 300') selon l'une quelconque des revendications 1 à 4, **caractérisé en ce que** la couche de placage (2.1, 2.2, 20.1, 20.2) et / ou la couche de noyau (1, 10) est conçue de manière à aider à la formation de la couche à "bande brune" (30.1, 30.2).

6. Composant de brasage (100', 200', 300') selon l'une quelconque des revendications 1 à 5, **caractérisé en ce que** le second alliage d'aluminium de la couche de placage (2.1, 2.2, 20.1, 20.2) est formé en ayant des proportions de Si comprises entre 0,6 % et 21 %, en particulier en ayant des proportions de Si comprises entre 6 % et 15 %, en particulier en ayant des proportions de Si comprises entre 6 % et 12 %.

7. Composant de brasage (100', 200', 300') selon l'une quelconque des revendications 1 à 6, **caractérisé en ce que** la couche de noyau (1, 10) présente une proportion de Si plus faible que celle de la couche de placage (2.1, 2.2, 20.1, 20.2).

8. Composant de brasage (100', 200', 300') selon l'une quelconque des revendications 1 à 7, **caractérisé en ce que** la couche de placage (2.1, 2.2, 20.1, 20.2) et / ou une couche latérale de noyau (1.2, 1.3) est conçue de manière à aider à la formation de la couche à "bande brune" (30.1, 30.2), **en ce que**, en particulier, seulement une couche principale de noyau (1.1) est conçue pour empêcher la formation de la couche à "bande brune" (30.1, 30.2).

9. Composant de brasage (100', 200', 300') selon l'une quelconque des revendications 1 à 8, **caractérisé en ce qu'**une couche principale de noyau (1.1, 10.1) présente une proportion de Fe plus faible que celle d'une couche latérale de noyau (1.2, 1.3).

10. Procédé de fabrication pour un composant de brasage (100', 200', 300'), en particulier pour un tube ou une plaque, selon l'une quelconque des revendications 1 à 9, ledit procédé présentant les étapes consistant :
- à mettre en forme une bande tubulaire, en particulier au cours d'un procédé pour former des courbures et / ou des plis et / ou des rainures, procédé au cours duquel est formé un profil, en particulier fermé ;
- à braser dans la zone au moins au nombre de un, en formant, dans la zone, l'assemblage par brasage prévu ;
- à former, au cours d'un processus de brasage, une couche à "bande brune" (30.1, 30.2) à partir du premier et du second alliage d'aluminium ;
- où la couche de noyau est d'une valeur au moins de 5 mV plus électropositive que la couche à "bande brune", et
- où une épaisseur de la couche de noyau (1, 10) et / ou une épaisseur de la couche de placage (2.1, 2.2, 20.1, 20.2) sont conçues de manière telle, que, après le processus de brasage, dans la zone au moins au nombre de un, située en particulier dans la zone de l'assemblage par brasage, il subsiste encore au moins 5 % de l'épaisseur de bande qui est occupée par le premier alliage d'aluminium de la couche de noyau (1, 10), et où la couche à "bande brune" (30.1, 30.2) occupe plus de 20 % de l'épaisseur de la bande, et où la couche de noyau (1, 10) est réalisée en étant multicouche et en comprenant une couche principale de noyau (1.1, 10.1) et au moins une couche latérale de noyau (1.2, 1.3).

11. Echangeur de chaleur, en particulier échangeur de chaleur de gaz d'échappement et / ou d'air de suralimentation, servant à l'échange de chaleur entre d'une part un premier fluide, en particulier des gaz d'échappement et / ou un air de suralimentation, et d'autre part un second fluide, en particulier un liquide de refroidissement, ledit échangeur de chaleur présentant :
- un bloc servant au guidage du premier et du second fluide séparés l'un de l'autre et échangeant de la chaleur,
ledit bloc comprenant :
- un certain nombre de conduits d'écoulement traversés par le premier fluide ;
ledit échangeur de chaleur présentant :
- une première chambre traversée par le second fluide et logeant les conduits d'écoulement ;
- un carter dans lequel sont disposés la chambre et les conduits d'écoulement ;
**caractérisé**
**en ce qu'**au moins un composant de brasage est formé selon l'une quelconque des revendications 1 à 9, en particulier un conduit d'écoulement se présentant sous la forme d'un tube selon l'une quelconque des revendications 1 à 9.

12. Utilisation de l'échangeur de chaleur selon la revendication 11, comme radiateur de chauffage ou évaporateur ou radiateur à liquide de refroidissement ou refroidisseur d'huile ou condenseur, ou bien comme refroidisseur de gaz d'échappement et / ou d'air de suralimentation servant au refroidissement de gaz d'échappement et / ou d'air de suralimentation dans un système de recyclage des gaz d'échappement et / ou de fourniture d'air de suralimentation d'un moteur à combustion interne d'un véhicule automobile.
